# EUROPEAN PATENT SPECIFICATION

(11) **EP 3 346 863 B1**
(45) Date of publication and mention of the grant of the patent: **28.08.2019**
(21) Application number: 16766451.5
(22) Date of filing: 08.09.2016
(51) Int. Cl.: A43B 7/28, B29D 35/12, B29D 35/14, A43B 23/04, A41H 42/00

(54) **SHRINK SHOE OR SOCK DEVICE**
SCHRUMPFSCHUH- ODER SOCKENVORRICHTUNG
CHAUSSURE RÉTRÉCISSABLE OU DISPOSITIF DE CHAUSSETTE

(30) Priority: 08.09.2015 US 201562215302 P
(43) Date of publication of application: 18.07.2018
(73) Proprietor: Avery Dennison Retail Information Services, LLC, Mentor, OH 44060 (US)
(72) Inventor: DE BACKER, Mathieu, 63066 Grottammare (IT)
(74) Representative: Müller-Boré & Partner Patentanwälte PartG mbB
(86) International application number: PCT/US2016/050630
(87) International publication number: WO 2017/044531

(56) References cited:
- US-A- 2 435 797
- US-A- 2 641 004
- US-A1- 2013 047 471
- US-A1- 2014 134 378
- US-B2- 8 959 691

## Description

### BACKGROUND OF THE INVENTION

The present invention relates generally to a web of material die cut into a general outline or shape of a shoe or sock. More particularly, the present disclosure relates to a web of LYCRA® material wrapped around a heat resistant mold and heated to shrink the material into a flexible, form fitting shoe upper or sock concept that provides a performance-enhancing stretch function.

Typically, athletic shoes and other shoes are manufactured with a flat, relatively hard insole material, and manufacturers usually slip a resilient foam insert piece into the shoe which is shaped in the heel and instep areas to cradle the foot and thus make the shoe more comfortable. However, when running or walking, these various materials all return to their original flat shapes when the foot is lifted off the ground. When the foot again steps down, the materials compress, but, because the foot is not flat, certain areas of the foot make contact first and press down harder.

It would be desirable to have a shoe or sock structure with an insole and upper surface which matches the individual contours of the foot. With such a sole, the impact of running or walking would be taken up more uniformly across the foot area, and the shoe would feel much more comfortable. Also, the foot would slip less inside the shoe with supportive sock structure.

Further, since all feet have different shapes, anatomically molded components cannot possibly fit everyone. Only a moldable component can conform to any foot and therefore fit properly. Accordingly, the present invention discloses a shrink shoe or sock device that comprises a flexible, form fitting shoe upper or sock structure that provides a performance-enhancing stretch function.

US 2 641 004 A describes a method for producing knitted shoe uppers of shrinkable yarn, wherein the shoe upper is initially knitted in the form of a soft and pliable sock 10 from yarn spun from synthetic fibers.

US 8 959 691 B2 describes a weaving method of a three-dimensional vamp. The heat shrinkable and irreversible properties of a high shrinkage yarn or hot melt yarn are used to seal the sock-shaped fabric with the shoe last, thereby achieving the substantial physical properties. The turner cost and the fabric flotsam can be reduced by the process of manufacturing the integrally formed vamp.

US 2014/134378 A1 describes three-dimensional articles comprising flexible-composite materials and methods of manufacturing said three-dimensional articles. More particularly, methods for manufacturing seamless three-dimensional-shaped articles usable for such finished products as airbags/inflatable structures, bags, shoes, and similar three-dimensional products. A preferred manufacturing process combines composite molding methods with specific precursor materials to form fiber-reinforced continuous shaped articles that are flexible and collapsible.

### SUMMARY OF THE INVENTION

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The subject matter disclosed and claimed herein, in one aspect thereof, comprises a web of material die cut into a general outline or shape of a shoe upper or sock structure. The web of material is a multi-layer, three dimensional woven fabric material. The fabric is then wrapped around a heat resistant mold, a mold which has been created to simulate the shape of the foot of the intended wearer and heat is applied to shrink the fabric around the mold to form a flexible, form fitting, unitary piece which can then be used as a sock or finished into a shoe, such as by adding additional components such as the sole for a shoe.

In a preferred embodiment, the completed shoe upper is then secured to a shoe sole, and laces and a shoe tongue are added as well. The shoe upper or the sock structure is perfectly shaped to the mold and can also be made to custom fit other mold shapes as well. The exterior of the completed shoe upper or sock structure can be modified per a user's needs or wants and/or manufacturing constraints.

For example, if the three dimensional weave or woven fabric is used to create the web of material, then topographical features can be added to the exterior of the shoe upper or sock structure to make puffed areas more firm, or to add texture or other similar features, such as ridges, geometric shapes and other elements. Furthermore, patterns and/or designs and/or a mixture of both can be woven over the entire area of the shoe upper or sock structure, or just in limited areas on the shoe upper or sock structure, depending on the needs and wants of a user as well as manufacturing constraints. The shoe or sock may be further customized with reflective materials or other heat transfer type applications such as offered under the Agility® brand of Avery Dennison Corporation of Glendale, CA.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

These, as well as other objects and advantages of this invention, will be more completely understood and appreciated by referring to the following more detailed description of the presently preferred exemplary embodiments of the invention in conjunction with the accompanying drawings, of which:
FIG. 1A illustrates a side sectional view of the three dimensional weave fabric material before heat treating in accordance with the disclosed architecture;
FIG. 1B illustrates a side section view of the three dimensional weave fabric material after heat treating in accordance with the disclosed architecture; and
FIG. 2 illustrates a perspective view of the shrink shoe device or sock structure positioned around a heat resistant mold in accordance with the disclosed architecture.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

A shoe or sock structure with an insole and upper surface which matches the individual contours of the foot would greatly aid in the impact of running, walking or other athletic activity, and the shoe or sock would feel much more comfortable. Also, the foot would slip less inside the shoe with the sock structure. Further, since all feet have different shapes, anatomically molded components cannot possibly fit everyone. Only a moldable component can conform to any foot and therefore fit properly.

Thus, a shrink shoe or sock device is disclosed wherein a web of material is die cut into a general outline or shape of a shoe upper or sock structure. The web of material is a multi-layer. The fabric is then wrapped around a heat resistant mold and heat is applied to shrink the fabric around the mold to form a flexible, form fitting, unitary piece. The completed shoe upper is then secured to a shoe sole, and laces and a shoe tongue can be added as well. The shoe upper and the sock structure is perfectly shaped to the mold and can also be made to custom fit other mold shapes as well.

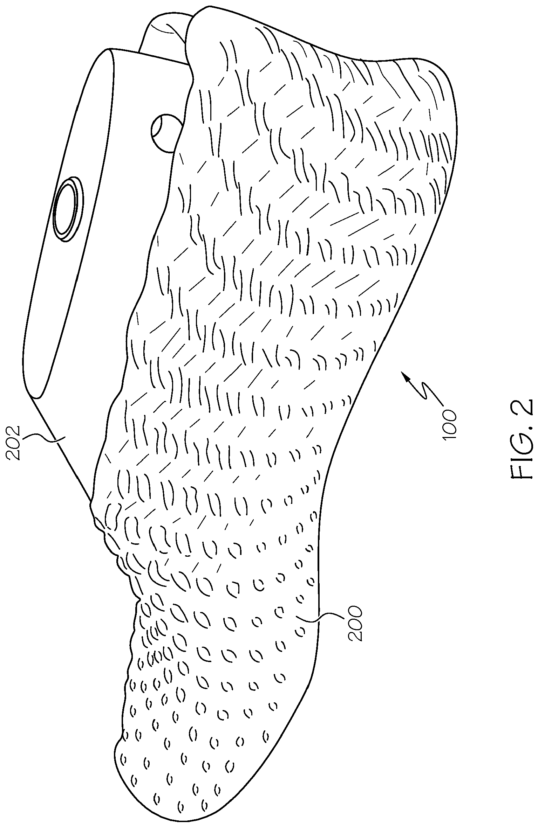

Referring initially to the drawings, FIG. 2 illustrates a web of material 200 shrink wrapped around a heat resistant mold 202 to form a very flexible, form fitting, unitary piece (i.e., shoe upper or sock structure). The shoe upper or sock structure that is formed is perfectly shaped to the mold (or shoe form or last) 202, and can be made to custom fit other molds 202. Using the web of material 200 to shrink wrap a mold 202 is merely one possible example and the same method of shrink wrapping can be used in producing other suitable items as well.

The web of material 200 is a multi-layer, three dimensional weave fabric material. Using the web of material 200 for producing shoes or sock structures is merely one possible example and the same fabric material may be used for any suitable application. Thus, although the term "fabric" is used throughout the present disclosure for exemplary purposes, the term "fabric" may be any single item or material, or a group of items or material.

A single layer fabric material (not shown) comprises one layer of material, typically manufactured of synthetic material, or synthetic blends, such as polyester, lycra, etc., but any other suitable material can be used as is known in the art without affecting the overall concept of the invention. The single layer fabric material can be any suitable shape and size depending on the needs and wants of a user, as well as manufacturing constraints.

The three dimensional weave fabric material 100 comprises two layers of material, a face (or surface) layer 102 and a back layer 104. Typically, the face layer 102 and the back layer 104 are manufactured of synthetic material, or synthetic blends, such as polyester, Lycra®, etc., but any other suitable material can be used as is known in the art without affecting the overall concept of the invention. The face layer 102 and the back layer 104 can be any suitable shape and size depending on the needs and wants of a user, as well as manufacturing constraints.

The face layer 102 and the back layer 104 are then woven together via threads 106. The threads 106 are preferably floating Lycra® threads but can be any other suitable material as is known in the art. For example, the threads 106 used may be monofilament yarns, multifilament yarns, spun yarns, etc. as desired, and these threads 106 can be made from artificial, natural or synthetic fibers depending on the user's needs or wants, and/or manufacturing constraints. The threads 106 may also be elastic or non-elastic yarn, or various combinations thereof. The type of threads 106 weaving the face layer 102 and the back layer 104 together throughout the body of the fabric material 100 and the number of yarns may be varied over wide ranges and will be primarily controlled by the desired end use for the fabric material 100. Typically, the threads 106 have a denier of from 100 to 1000 and preferably between 150 and 600 denier.

The face layer 102 and the back layer 104 are woven together to create predetermined patterns or areas where the two layers 102 and 104 are not woven together. These areas which are not woven together create tubes (or gaps or pockets) 108. Specifically, the weaving is controlled by a computer program that will weave or not weave the two layers 102 and 104 together. Typically, the three dimensional fabric material 100 is produced on customized or purpose-built weaving machines, which incorporate a computer program to control the action of the threads 106.

Accordingly, the face layer 102 includes sequential unstitched surface portions and sequential stitched surface portions formed in an alternating and repeating pattern. For example, standard weaving will continue row after row. Then, when a tube or gap 108 is to be formed, the floating threads 106 are pushed into the two layers 102 and 104 (similar to a sewing machine), and then the weaving or sewing stops and resumes when enough space has been created for a gap or tube 108 to form. Specifically, the warp (or longitudinal threads of the weave) are split in order to create this gap or tube 108. This process is then repeated row after row until all the weaving is done.

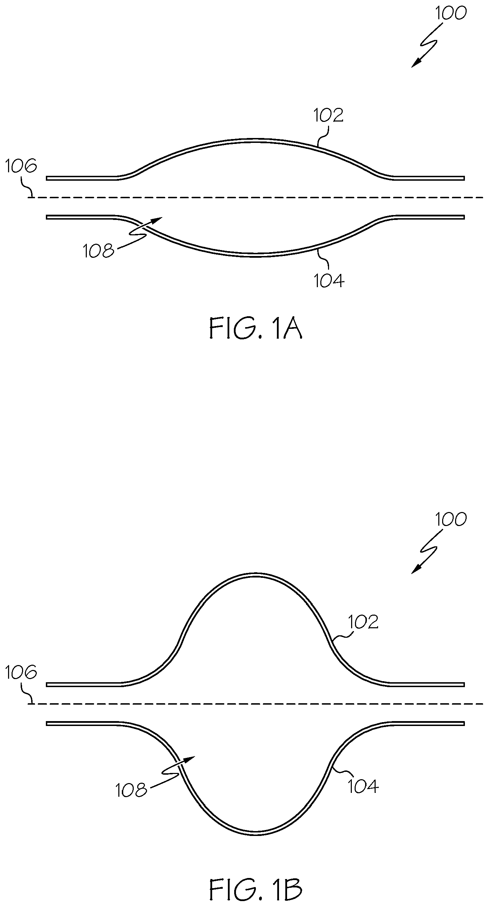

Once the weaving is complete (as shown in FIG. 1A), the three dimensional weave fabric material 100 is then heat treated. The three dimensional weave fabric material 100 can be heat treated via any suitable heat treating process as is known in the art. The heat treating process shrinks the floating threads 106, causing manipulation of the tube or gap 108. Specifically, the tube or gap 108 puffs or stands up more than if there was no heat treatment (as shown in FIG. 1B). Using synthetic material or synthetic blends for layers 102 and 104 allows the heat treating to shrink the synthetic material so as to create the puffed areas. The bigger surface area there is on the material, the more puffing can be created by the heat treatment. Typically, the puffed design extends into both layers of the three dimensional weave fabric material 100, creating the three dimensional design. However, the puffed design can be manipulated so that it is more exaggerated on one side or layer than the other side or layer. Additionally, the tubes or gaps 108 can be filled with fibers or other suitable materials as is known in the art to make the puffed areas more firm, or to add texture or other similar features.

Thus, the three dimensional weave fabric material 100 can be any suitable size, shape, and pattern as is known in the art without affecting the overall concept of the invention. One of ordinary skill in the art will appreciate that the size and/or shape of the face layer 102 and the back layer 104 as shown in FIGS. 1A and 1B is for illustrative purposes only and many other sizes and/or shapes of the layers 102 and 104 are well within the scope of the present disclosure. Although dimensions of the layers 102 and 104 (i.e., length, width, and height) are important design parameters for good performance, the layers 102 and 104 may be any size and/or shape that ensures an optimal stretch function and other performance characteristics.

Any number of fabric layers can be used to make the web of material 200 that is used to make the shoe or sock structure of the present invention, as long as the fabric layers meet the performance properties described herein. Once a web of material 200 is chosen, the web of material is die cut into a general outline of a shoe upper or sock structure. The die cut fabric is then wrapped around a heat resistant mold (or shoe form or last) 202 and heat or steam is applied. The heating may occur in a conventional oven, an air circulating oven, or the like. Depending on the number of layers used in the web, the fabric is heated or steamed to a temperature from about 100 degrees Celsius to about 160 degrees Celsius, which causes the fabric to shrink around the mold (or shoe form or last) 202 to form a very flexible, form fitting, unitary piece. The shoe upper or sock structure that is formed is perfectly shaped to the mold 202, and can also be made to custom fit other sized molds. Additionally, the shoe upper or sock structure is advantageously shapeable over a range of shoe/sock sizes and shapes of molds.

After the heating is complete, the shoe upper or sock structure is removed from the heat and allowed to cool, generally to a temperature of less than about 50 degrees Celsius. The shoe upper or sock structure may then be removed from the mold 202. The shoe upper or sock structure may also be permitted to cool prior to removing the shoe upper or sock structure from the mold 202. The shoe upper or sock structure is thus formed of a seamless, shaped membrane comprised of at least one fabric layer.

FIG. 2 is for illustrative purposes only and many other sizes and/or shapes of the heat-treated shoe upper or sock structure are well within the scope of the present disclosure. Although dimensions of the heat-treated shoe upper or sock structure (i.e., length, width, and height) are important design parameters for good performance, the heat-treated shoe upper or sock structure may be any size and/or shape that ensures an optimal stretch function and other performance characteristics

Furthermore, the shoe upper or sock structure can be made to have reinforced areas, such as in the toe and/or heel regions. The inclusion of heel and toe reinforcements results in the shoe upper or sock structure having a more defined, foot-like shape. The shoe upper or sock structure is self-supporting and maintains the three-dimensional shape of the mold 202 even after the shoe upper or sock structure is removed from the mold 202. By self-supporting, it is meant that the shoe upper or sock structure maintains an upright, substantially vertical orientation without any external support. By substantially vertical orientation, it is meant to describe a shoe upper or sock structure that has an upright, vertical orientation or a nearly upright, vertical orientation.

The shoe upper or sock structure can be used as a stand-alone structure or may be used in the formation of footwear articles, such as shoes and boots. A shoe or boot containing the shoe upper or sock structure may be formed in any manner known to those of skill in the art. It is to be noted that all standard and/or conventional methods of making and/or assembling footwear articles as known by those of skill in the art may be utilized, and are considered to be within the scope of the invention. For instance, molding, pressing, gluing, stitching, fusion welding, fusion bonding, compression molding, upper bonding, ultrasonic welding, as well as any conventional or commercial tooling are considered to be within the purview of the invention.

For example, the completed shoe upper can be secured to a shoe sole (synthetic material, rubber, or other natural material) or other suitable article. Typically, the shoe upper is secured to the shoe sole via gluing, sewing, etc. A user can also add laces and a shoe tongue to the shoe upper, and any other suitable additions to the shoe upper as is known in the art. Further, the exterior of the shoe upper or sock structure can be modified depending on the needs and wants of a user and/or manufacturing constraints.

For example, the heat treated three dimensional weave fabric components can be created or produced into different textures or designs by varying the heat treatment, thread colors, weave design. All of the unique designs show vivid colors and details and are differentiated from the normal fabric feel by the pronounced puffs and ridges caused by heat treating the fabric.

Furthermore, the patterns and/or designs can be woven over the entire area of the shoe upper or sock structure, or just in limited areas on the shoe upper or sock structure, depending on the needs and wants of a user as well as manufacturing constraints. Any pattern and/or design can be woven and the pattern and/or design can be of any shape or size. There can be a plurality of the same pattern and/or design, or a mixture of patterns and/or designs. Large patterns and/or designs can be utilized or small patterns and/or designs, or combinations of both large and small patterns and/or designs can be utilized. The different size and/or shape of the patterns and/or designs are created by varying the size of the tube or gap that is woven. Any size and/or shaped shoe upper, sock structure, or other item can be created with the pattern and/or design. Further, the patterns and/or designs can be used in woven labels, such as those labels found on the interior of a garment or shoe to help with branding.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A shrink shoe device, comprising:
a web of material (200) die cut into a general outline of a shoe upper;
a shoe sole;
a plurality of laces; and
a shoe tongue;
wherein the web of material (200) is a multilayer, three dimensional weave fabric material (100), wherein the multi-layer, three dimensional weave fabric material (100) comprises a face layer (102) woven to a back layer (104) via a plurality of floating threads (106);
wherein the web of material (200) is wrapped around a shoe form (202) and heat is applied to shrink the fabric around the shoe form (202) to form a flexible, form fitting, unitary shoe upper; and
wherein the shoe upper is then secured to the shoe sole, and the plurality of laces and the shoe tongue are secured to the shoe upper.

2. The shrink shoe device of claim 1, wherein the web of material (200) is a single layer fabric material with a relatively smooth appearance.

3. The shrink shoe device of claim 1, wherein the web of material (200) is heated to a temperature of about 160 degrees Celsius.

4. The shrink shoe device of claim 1, wherein the multi-layer, three dimensional weave fabric material (100) comprises a face layer (102) woven to a back layer (104) via a plurality of floating threads (106) to create a predetermined pattern.

5. The shrink shoe device of claim 4, wherein the predetermined pattern comprises tubes (108) that are areas where the face layer (102) and the back layer (104) are not woven together.

6. The shrink shoe device of claim 5, wherein the tubes (108) are manipulated via a heat shrinking process, causing the tubes (108) to puff.

7. The shrink shoe device of claim 6, wherein the puffed tubes (108) can be manipulated such that the puffing is more exaggerated on the face layer (102).

8. The shrink shoe device of claim 7, wherein the predetermined pattern is woven over an entire area of the shoe upper.

9. The shrink shoe device of claim 8, wherein the tubes (108) are filled with fibers to add texture.

10. A sock structure, comprising:
a web of material (200) die cut into a general outline of a sock;
wherein the web of material (200) is a multilayer, three dimensional weave fabric material (100), wherein the multi-layer, three dimensional weave fabric material (100) comprises a face layer (102) woven to a back layer (104) via a plurality of floating threads (106); and
wherein the web of material (200) is wrapped around a heat resistant mold and heat is applied to shrink the fabric around the heat resistant mold to form a flexible, form fitting, unitary sock structure.

11. The sock structure of claim 10, wherein the web of material (200) is a single layer fabric material with a relatively smooth appearance.

12. The sock structure of claim 10, wherein the web of material (200) is heated to a temperature of about 160 degrees Celsius.

13. The sock structure of claim 10, wherein the multi-layer, three dimensional weave fabric material (100) comprises a face layer (102) woven to a back layer (104) via a plurality of floating threads (106) to create a predetermined pattern.

14. The sock structure of claim 13, wherein the predetermined pattern is woven over an entire area of the sock structure.

15. A method of forming a shrink shoe device, the shrink shoe device comprising a web of material (200), wherein the web of material (200) is a multilayer, three dimensional weave fabric material (100), wherein the multi-layer, three dimensional weave fabric material (100) comprises a face layer (102) woven to a back layer (104) via a plurality of floating threads (106);
the method comprising the following steps:
die cutting a web of material (200) into a general outline of a shoe upper;
wrapping the web of material (200) around a heat resistant mold;
applying heat to shrink the web of material (200) around the heat resistant mold to form a flexible, form fitting, unitary shoe upper;
securing the shoe upper to a shoe sole;
securing a plurality of laces to the shoe upper; and
securing a shoe tongue to the shoe upper.

## Patentansprüche

1. Schrumpfschuhvorrichtung, die umfasst:
eine Materialbahn (200), die zu einem allgemeinen Umriss eines Schuhoberteils gestanzt ist;
eine Schuhsohle;
mehrere Schnürbänder; und
eine Schuhzunge;
wobei die Materialbahn (200) ein mehrschichtiges dreidimensionales Bindungsgewebematerial (100) ist, wobei das mehrschichtige dreidimensionale Bindungsgewebematerial (100) eine Oberschicht (102), die über eine Vielzahl flottierender Fäden (106) an eine Rückschicht (104) gewebt ist, umfasst;
wobei die Materialbahn (200) um eine Schuhform (202) gehüllt wird und Wärme angewendet wird, um das Gewebe um die Schuhform (202) herum zu schrumpfen, um einen flexiblen passgenauen einheitlichen Schuhoberteil auszubilden; und
wobei der Schuhoberteil dann an der Schuhsohle befestigt wird und die mehreren Schnürbänder und die Schuhzunge an dem Schuhoberteil befestigt werden.

2. Schrumpfschuhvorrichtung nach Anspruch 1, wobei die Materialbahn (200) ein einschichtiges Gewebematerial mit einem relativ glatten Aussehen ist.

3. Schrumpfschuhvorrichtung nach Anspruch 1, wobei die Materialbahn (200) auf eine Temperatur von etwa 160 Grad Celsius erhitzt wird.

4. Schrumpfschuhvorrichtung nach Anspruch 1, wobei das mehrschichtige dreidimensionale Bindungsgewebematerial (100) eine Oberschicht (102), die über eine Vielzahl flottierender Fäden (106) an eine Rückschicht (104) gewebt ist, umfasst, um ein vorgegebenes Muster zu erzeugen.

5. Schrumpfschuhvorrichtung nach Anspruch 4, wobei das vorgegebene Muster Röhren (108) umfasst, die Bereiche sind, in denen die Oberschicht (102) und die Rückschicht (104) nicht miteinander verwebt sind.

6. Schrumpfschuhvorrichtung nach Anspruch 5, wobei die Röhren (108) über ein Wärmeschrumpfungsverfahren bearbeitet werden, das bewirkt, dass die Röhren (108) sich aufbauschen.

7. Schrumpfschuhvorrichtung nach Anspruch 6, wobei die aufgebauschten Röhren (108) derart bearbeitet werden, können, dass das Aufbauschen auf der Oberschicht (102) ausgeprägter ist.

8. Schrumpfschuhvorrichtung nach Anspruch 7, wobei das vorgegebene Muster über eine Gesamtfläche des Schuhoberteils gewebt ist.

9. Schrumpfschuhvorrichtung nach Anspruch 8, wobei die Röhren (108) mit Fasern gefüllt sind, um Textur hinzuzufügen.

10. Sockenstruktur, die umfasst:
eine Materialbahn (200), die zu einem allgemeinen Umriss einer Socke gestanzt ist;
wobei die Materialbahn (200) ein mehrschichtiges dreidimensionales Bindungsgewebematerial (100) ist, wobei das mehrschichtige dreidimensionale Bindungsgewebematerial (100) eine Oberschicht (102), die über eine Vielzahl flottierender Fäden (106) an eine Rückschicht (104) gewebt ist, umfasst; und
wobei die Materialbahn (200) um eine wärmebeständige Form gehüllt wird und Wärme angewendet wird, um das Gewebe um die wärmebeständige Form herum zu schrumpfen, um eine flexible passgenaue einheitliche Sockenstruktur auszubilden.

11. Sockenstruktur nach Anspruch 10, wobei die Materialbahn (200) ein einschichtiges Gewebematerial mit einem relativ glatten Aussehen ist.

12. Sockenstruktur nach Anspruch 10, wobei die Materialbahn (200) auf eine Temperatur von etwa 160 Grad Celsius erhitzt wird.

13. Sockenstruktur nach Anspruch 10, wobei das mehrschichtige dreidimensionale Bindungsgewebematerial (100) eine Oberschicht (102), die über eine Vielzahl flottierender Fäden (106) an eine Rückschicht (104) gewebt ist, umfasst, um ein vorgegebenes Muster zu erzeugen.

14. Sockenstruktur nach Anspruch 13, wobei das vorgegebene Muster über eine Gesamtfläche des Schuhoberteils gewebt ist.

15. Verfahren zum Ausbilden einer Schrumpfschuhvorrichtung, wobei die Schrumpfschuhvorrichtung eine Materialbahn (200) umfasst, wobei die Materialbahn (200) ein mehrschichtiges dreidimensionales Bindungsgewebematerial (100) ist, wobei das mehrschichtige dreidimensionale Bindungsgewebematerial (100) eine Oberschicht (102), die über eine Vielzahl flottierender Fäden (106) an eine Rückschicht (104) gewebt sind, umfasst;
wobei das Verfahren die folgenden Schritte umfasst:
Stanzen einer Materialbahn (200) zu einem allgemeinen Umriss eines Schuhoberteils;
Hüllen des Bahnmaterials (200) um eine wärmebeständige Form;
Anwenden von Wärme, um das Bahnmaterial (200) um die wärmebeständige Formherum zu schrumpfen, um einen flexiblen passgenauen unitären Schuhoberteil auszubilden;
Befestigen des Schuhoberteils an einer Schuhsohle;
Befestigen mehrerer Schnürbänder an dem Schuhoberteil; und
Befestigen einer Schuhzunge an dem Schuhoberteil.

## Revendications

1. Dispositif de chaussure rétrécissable comportant :
une toile de matériau (200) découpée à la forme en un contour général d'une tige de chaussure ;
une semelle de chaussure ;
une pluralité de lacets ; et
une languette de chaussure ;
dans lequel la toile de matériau (200) est un matériau de tissu léger (100) en trois dimensions multicouche, dans lequel le matériau de tissu léger (100) en trois dimensions multicouche comporte une couche de face (102) tissée sur une couche arrière (104) via une pluralité de fils flottants (106) ;
dans lequel la toile de matériau (200) est enveloppée autour d'une forme de chaussure (202) et de la chaleur est appliquée pour rétrécir le tissu autour de la forme de chaussure (202) pour former une tige de chaussure unique flexible à ajustement de forme ; et
dans lequel la tige de chaussure est ensuite fixée à la semelle de chaussure et la pluralité de lacets et la languette de chaussure sont fixés à la tige de chaussure.

2. Dispositif de chaussure rétrécissable selon la revendication 1, dans lequel la toile de matériau (200) est un matériau de tissu à couche unique avec un aspect relativement lisse.

3. Dispositif de chaussure rétrécissable selon la revendication 1, dans lequel la toile de matériau (200) est chauffée à une température d'environ 160 degrés Celsius.

4. Dispositif de chaussure rétrécissable selon la revendication 1, dans lequel le matériau de tissu léger (100) en trois dimensions multicouche comporte une couche de face (102) tissée sur une couche arrière (104) via une pluralité de fils flottants (106) pour créer un motif prédéfini.

5. Dispositif de chaussure rétrécissable selon la revendication 4, dans lequel le motif prédéfini comporte des tubes (108) qui sont des zones où la couche de face (102) et la couche arrière (104) ne sont pas tissées ensemble.

6. Dispositif de chaussure rétrécissable selon la revendication 5, dans lequel les tubes (108) sont manipulés via un processus de rétrécissement à la chaleur, amenant les tubes (108) à gonfler.

7. Dispositif de chaussure rétrécissable selon la revendication 6, dans lequel les tubes (108) gonflés peuvent être manipulés de sorte que le gonflement soit plus exagéré sur la couche de face (102).

8. Dispositif de chaussure rétrécissable selon la revendication 7, dans lequel le motif prédéfini est tissé sur toute une zone de la tige de chaussure.

9. Dispositif de chaussure rétrécissable selon la revendication 8, dans lequel les tubes (108) sont remplis de fibres pour ajouter de la texture.

10. Structure de chaussette comportant:
une toile de matériau (200) découpée à la forme en un contour général d'une chaussette ;
dans lequel la toile de matériau (200) est un matériau de tissu léger (100) en trois dimensions multicouche, dans lequel le matériau de tissu léger (100) en trois dimensions multicouche comporte une couche de face (102) tissée sur une couche arrière (104) via une pluralité de fils flottants (106) ; et
dans lequel la toile de matériau (200) est enveloppée autour d'un moule résistant à la chaleur et de la chaleur est appliquée pour rétrécir le tissu autour du moule résistant à la chaleur pour former une structure de chaussette unique flexible à ajustement de forme.

11. Structure de chaussette selon la revendication 10, dans lequel la toile de matériau (200) est un matériau de tissu à couche unique avec un aspect relativement lisse.

12. Structure de chaussette selon la revendication 10, dans lequel la toile de matériau (200) est chauffée à une température d'environ 160 degrés Celsius.

13. Structure de chaussette selon la revendication 10, dans lequel le matériau de tissu léger (100) en trois dimensions multicouche comporte une couche de face (102) tissée sur une couche arrière (104) via une pluralité de fils flottants (106) pour créer un motif prédéfini.

14. Structure de chaussette selon la revendication 13, dans lequel le motif prédéfini est tissé sur toute une zone de la structure de chaussette.

15. Procédé de formation d'un dispositif de chaussure rétrécissable, le dispositif de chaussure rétrécissable comportant une toile de matériau (200), dans lequel la toile de matériau (200) est un matériau de tissu léger (100) en trois dimensions multicouche, dans lequel le matériau de tissu léger (100) en trois dimensions multicouche comporte une couche de face (102) tissée sur une couche arrière (104) via une pluralité de fils flottants (106) ;
le procédé comportant les étapes suivantes :
la découpe à la forme d'une toile de matériau (200) en un contour général d'une tige de chaussure ;
l'enveloppement de la toile de matériau (200) autour d'un moule résistant à la chaleur ;
l'application de chaleur pour rétrécir la toile de matériau (200) autour du moule résistant à la chaleur pour former une tige de chaussure unique flexible à ajustement de forme ;
la fixation de la tige de chaussure à une semelle de chaussure ;
la fixation d'une pluralité de lacets à la tige de chaussure ; et
la fixation d'une languette de chaussure à la tige de chaussure.
